# EUROPÄISCHE PATENTSCHRIFT

(11) **EP 1 486 841 B1**
(45) Veröffentlichungstag und Bekanntmachung des Hinweises auf die Patenterteilung: **12.05.2010**
(21) Anmeldenummer: 04012547.8
(22) Anmeldetag: 27.05.2004
(51) Int. Cl.: G05B 19/418

(54) **Verfahren zur Funktionsanzeige eines Feldgerätes der Prozessautomatisierungstechnik**
Method for indication of function of a field device in process automation technology
Procédé pour l' indication de fonction d'un appareil de terrain employé dans l'automatisation de processus

(43) Veröffentlichungstag der Anmeldung: 15.12.2004
(73) Patentinhaber: Endress + Hauser GmbH + Co. KG, 79689 Maulburg (DE)
(72) Erfinder: Dittrich, Gerhard, Dr., 79650 Schopfheim (DE)
(74) Vertreter: Andres, Angelika Maria

(56) Entgegenhaltungen:
- EP-A- 1 202 145
- WO-A-02/054161
- DE-C- 10 031 963
- US-A- 5 793 963
- US-A- 5 907 491
- US-A- 5 978 593
- US-A1- 2002 046 368

## Beschreibung

Die Erfindung betrifft ein Verfahren zur Funktionsanzeige eines Feldgerätes der Prozessautomatisierungstechnik gemäß dem Oberbegriff des Anspruchs 1.

In der Prozessautomatisierungstechnik werden vielfach Feldgeräte eingesetzt, die zur Erfassung und/oder Beeinflussung von Prozessvariablen dienen (siehe z.B. US patent US 5 793 963).

Beispiele für derartige Feldgeräte sind Füllstandsmesser, Massedurchflussmesser, Druck- und Temperaturmesser etc., die als Sensoren die entsprechenden Prozessvariablen Füllstand, Durchfluss, Druck bzw. Temperatur erfassen.

Zur Beeinflussung von Prozessvariablen dienen sogenannte Aktoren, z. B. Ventile, die den Durchfluss einer Flüssigkeit in einem Rohrleitungsabschnitt oder Pumpen die den Füllstand in einen Behälter beeinflussen.

Neben Sensoren und Aktoren werden auch Ein-/Ausgabeeinheiten (Remote I/Os) als Feldgeräte bezeichnet.

Eine Vielzahl solcher Feldgeräte werden von der Firma Endress + Hauser® hergestellt und vertrieben.

Häufig sind Feldgeräte über einen Feldbus (Profibus®, Foundation® Fieldbus, etc.) mit einem Prozessleitsystem verbunden. Das Prozessleitsystem dient zur Prozesssteuerung, Prozessvisualisierung, Prozessüberwachung sowie zur Konfigurierung und Parametrierung der Feldgeräte.

In der Regel besitzen mikroprozessorgesteuerte Feldgeräte Diagnosefunktionen, die den einwandfreien Betriebszustand eines Feldgerätes überwachen. Fehlfunktionen eines Feldgerätes werden vom Feldgerät an das Prozessleitsystem gemeldet und in diesem auf einer graphischen Benutzeroberfläche entsprechend dargestellt.

Teilweise ist eine Funktionskontrolle von Feldgeräten auch vor Ort, d.h. an der entsprechenden Prozesskomponente notwendig. Hierzu muss ein Servicetechniker alle an der Prozesskomponente (z. B. einen Tank) installierten Feldgeräte aufsuchen und einzeln überprüfen. Teilweise müssen hierfür spezielle Menüpunkte am Display des jeweiligen Feldgerätes ausgewählt werden.

Da Feldgeräte manchmal nicht leicht zugänglich angeordnet sind, ist diese Vorgehensweise zur Funktionsüberprüfung von Feldgeräten äußerst umständlich.

Aufgabe der Erfindung ist es deshalb, ein Verfahren zur Funktionsanzeige eines Feldgerätes der Prozessautomatisierungstechnik anzugeben, das die oben genannten Nachteile nicht aufweist, dass insbesondere eine einfache und schnelle Funktionsüberprüfung eines Feldgerätes ermöglicht und das kostengünstig durchführbar ist.

Gelöst wird diese Aufgabe durch das in Anspruch 1 angegebene Verfahren.

Vorteilhafte Weiterentwicklungen sind in den Unteransprüchen angegeben.

Wesentliche Idee der Erfindung ist es, ein Funksignal von einer Sendeeinheit zum Feldgerät zu übertragen und dadurch eine Gerätestatusabfrage im Feldgerät auszulösen. Entsprechend dem Ergebnis der Gerätestatusabfrage wird ein entsprechendes wahrnehmbares Signal erzeugt.

Über dieses Signal kann der Servicetechniker einfach und schnell erkennen, ob ein Feldgerät eine Fehlfunktion aufweist oder nicht.

Gemäß einer Weiterentwicklung der Erfindung wird das Signal nur erzeugt, wenn ein fehlerfreier Gerätestatus vorliegt.

In einer Weiterentwicklung der Erfindung ist das Signal ein optisches Signal. Ein sehr einfaches optisches Signal kann z. B. ein Blinken des Displays sein.

Neben optischen Signalen sind auch akustische Signale denkbar.

Bei der Sendeeinheit kann es sich um einen einfachen Handsender im Taschenformat handelt. Derartige Sendeeinheiten werden in vielen Bereichen z. B. als Garagentoröffner oder Funkfernbedienungen für Kraftfahrzeuge eingesetzt. Sie sind als Massenartikel sehr kostengünstig.

Nachfolgend ist die Erfindung anhand eines in der Zeichnung dargestellten Ausführungsbeispiels näher erläutert.

Es zeigen:
Fig. 1 Kommunikationsnetzwerk der Prozessautomatisierung;
Fig. 2 Feldgerät zur Verwendung des erfindungsgemäßen Verfahrens.

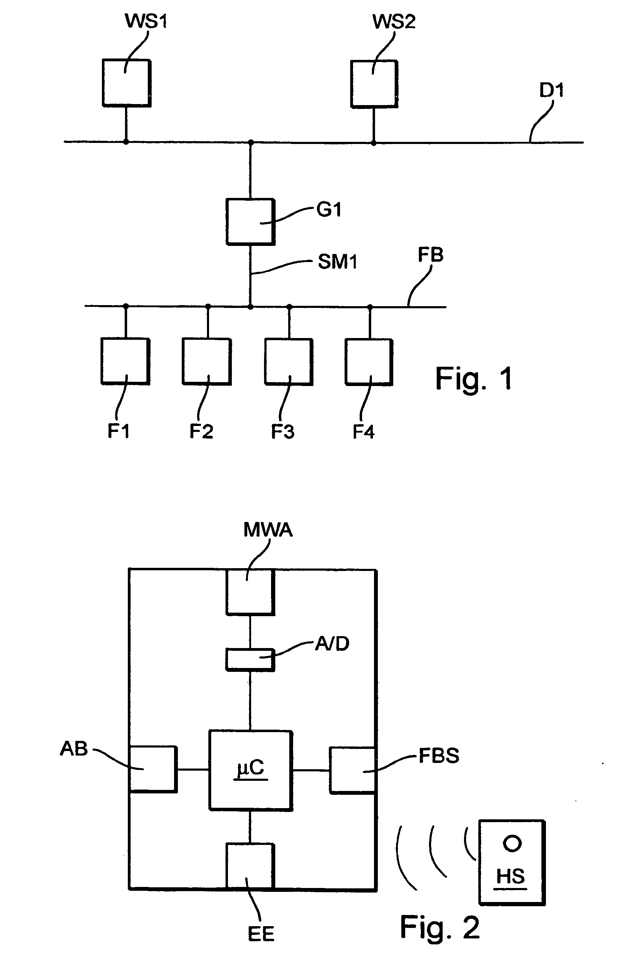

In Fig. 1 ist ein Netzwerk der Prozessautomatisierungstechnik näher dargestellt. An einem Datenbus D1 sind mehrere Rechnereinheiten, Workstations WS1, WS2 angeschlossen. Diese Rechnereinheiten dienen als Prozessleitsysteme. Über sie erfolgt die Prozessvisualisierung, Prozessüberwachung und das Engeenering sowie das Bedienen und Überwachen der Feldgeräte. Der Datenbus D1 arbeitet z. B. nach dem Profibus FMS-Standard oder nach dem HSE (High Speed Ethernet) - Standard der Foundation Fieldbus. Über ein Gateway G1, das auch als Linking Device oder als Segmentkoppler bezeichnet wird, ist der Datenbus D1 mit einem Feldbussegment SM1 verbunden. Das Feldbussegment SM1 besteht aus mehreren Feldgeräten F1, F2, F3, F4, die über einen Feldbus FB miteinander verbunden sind.

Bei den Feldgeräten F1, F2, F3, F4, kann es sich sowohl um Sensoren oder auch um Aktoren handeln.

Der Feldbus FB arbeitet entsprechend nach einem der bekannten Feldbusstandards Profibus®, Foundation Fieldbus® oder HART®.

In Fig. 2 ist ein Feldgerät näher dargestellt bei dem Feldgerät handelt es sich um einen Sensor. Bei diesem Sensor ist ein Messwertaufnehmer MWA, der zur Erfassung einer Prozessvariablen dient, über einen A/D-Wandler AD, in dem der Messwert digitalisiert wird, mit einem Mikrocontroller µC verbunden.

Der Mikrocontroller µC ist mit einer Anzeigebedieneinheit AB, die als LCD-Display mit mehreren Tasten ausgebildet ist, verbunden. Das LCD-Display dient im wesentlichen zur Messwertanzeige und zur Führung des Anwenders durch das Bedienmenü des Feldgeräts. Der Mikrocontroller µC ist weiterhin mit einer Empfangseinheit EE verbunden.

Die Empfangseinheit EE dient zum Empfang von Funksignalen, die von einem Handsender HS erzeugt werden.

Zur Verbindung mit dem Feldbus ist der Mikrocontroller µC mit einer Feldbusschnittstelle FBS verbunden.

Nachfolgend ist das erfindungsgemäße Verfahren näher erläutert. Ein Servicetechniker, der den Gerätestatus eines Feldgerätes abfragen möchte, begibt sich in die Nähe des Feldgerätes und betätigt den Handsender HS. Vom Handsender HS wird ein Funksignal zum Feldgerät übertragen. Nach Erhalt des Funksignals erfolgt im Mikrocontroller µC eine Abfrage des Gerätestatus. Je nach Ergebnis der Abfrage wird ein entsprechendes Signal (z. B. ein optisches Signal) erzeugt. Dieses optische Signal, das z. B. aus dem Blinken des LCD-Displays bestehen kann, signalisiert dem Servicetechniker die einwandfreie Funktion des aufgesuchten Feldgeräts. Mit Hilfe des erfindungsgemäßen Verfahrens ist so eine einfache Überprüfung von schwer zugänglichen Feldgeräten möglich. Innerhalb kurzer Zeit kann ein Servicetechniker feststellen welche Feldgeräte an einer Prozesskomponente fehlerfrei arbeiten.

Eine derartige Funktionsprüfung kann auch von ungeschulten Mitarbeitern z. B. bei einem Kontrollgang einfach durchgeführt werden.

## Patentansprüche

1. Verfahren zur Funktionsüberprüfung eines Feldgerätes (F1, F2, F3, F4) der Prozessautomatisierungstechnik zur Erfassung und/oder Beeinflussung von Prozessvariablen, mit folgenden Verfahrensschritten:
- Übertragung eines Funksignals von einer Sendeeinheit (HS) zu dem Feldgerät (F1, F2, F3, F4), das eine Abfrage des Feldgerätestatus im Feldgerät (F1, F2, F3, F4) auslöst;
- Erzeugung eines wahrnehmbaren Signals entsprechend dem Ergebnis der Abfrage des Feldgerätestatus,
**gekennzeichnet durch** die
- Verwendung eines optischen Signals zur Signalisierung des Feldgerätestatus, das aus einem Blinken eines am Feldgerät (F1, F2, F3, F4) vorgesehenen Displays (AB) besteht.

2. Verfahren nach Anspruch 1, **dadurch gekennzeichnet, dass** das Signal nur erzeugt wird, wenn ein fehlerfreier Gerätestatus vorliegt.

3. Verfahren nach Anspruch 1 oder 2, **dadurch gekennzeichnet, dass** neben dem optischen Signal ein akustisches Signal verwendet wird.

4. Verfahren nach Anspruch 1, 2 oder 3, **dadurch gekennzeichnet, dass** als Sendeeinheit (HS) ein Handsender in Taschenformat verwendet wird.

## Claims

1. Method to check the function of a field device (F1, F2, F3, F4) used in process automation engineering to determine and/or influence process variables, comprising the following steps:
- Transmission of a radio signal from a transmitter unit (HS) to a field device (F1, F2, F3, F4) which triggers the field device status to be queried in the field device (F1, F2, F3, F4);
- Generation of a perceivable signal corresponding to the result of the field device status query, **characterized in** the:
- use of an optical signal to signal the field device status, comprising a flashing display (AB) provided at the field device (F1, F2, F3, F4).

2. Method as per Claim 1, **characterized in that** the signal is only generated if the device status is error-free.

3. Method as per Claim 1 or 2, **characterized in that** an acoustic signal is also used in addition to the optical signal.

4. Method as per Claim 1, 2 or 3, **characterized in that** a hand-held pocket transmitter is used as the transmitter unit (HS).

## Revendications

1. Procédé destiné à la vérification du fonctionnement d'un appareil de terrain (F1, F2, F3, F4) de la technique d'automatisation des process, destiné à la mesure et/ou l'influence de variables process, avec les étapes de procédé suivantes :
- Transmission d'un signal radio de l'unité d'émission (HS) vers l'appareil de terrain (F1, F2, F3, F4), qui déclenche une interrogation de l'état dans l'appareil de terrain (F1, F2, F3, F4).
- Génération d'un signal perceptible selon le résultat de l'interrogation de l'état de l'appareil de terrain,
**caractérisé par**
l'utilisation d'un signal optique en vue de la signalisation de l'état de l'appareil de terrain, qui consiste en un clignotement d'un afficheur (AB) prévu sur l'appareil de terrain (F1, F2, F3, F4).

2. Procédé selon la revendication 1, **caractérisé en ce que** le signal n'est généré qu'en présence d'un état sans erreur de l'appareil.

3. Procédé selon la revendication 1 ou 2, **caractérisé en ce qu'**outre le signal optique est utilisé un signal acoustique.

4. Procédé selon la revendication 1, 2 ou 3, **caractérisé en ce qu'**est utilisé, en tant qu'unité d'émission (HS), un émetteur portatif au format de poche.
